# EUROPEAN PATENT APPLICATION

(11) **EP 4 661 497 A1**
(43) Date of publication of application: **10.12.2025**
(21) Application number: 24766197.8
(22) Date of filing: 15.01.2024
(51) Int. Cl.: H04W 36/00

(54) **SWITCHING METHOD AND APPARATUS**

(30) Priority: 07.03.2023 CN 202310260328
(71) Applicant: Huawei Technologies Co., Ltd., Shenzhen, Guangdong 518129 (CN)
(72) Inventor: WANG, Tongbo, Shenzhen, Guangdong 518129 (CN); LI, Jian, Shenzhen, Guangdong 518129 (CN); ZHU, Ting, Shenzhen, Guangdong 518129 (CN); GUO, Yongkang, Shenzhen, Guangdong 518129 (CN)
(74) Representative: Isarpatent
(86) International application number: PCT/CN2024/072344
(87) International publication number: WO 2024/183474

(57) **Abstract**

This application provides a handover method and an apparatus. The handover method is applied to a mobile terminal. The mobile terminal supports a synchronous dual band dual concurrent capability, and the mobile terminal has a first Wi-Fi path and a second Wi-Fi path. The handover method includes: The mobile terminal accesses a target AP through the first Wi-Fi path, and performs a Wi-Fi service through the first Wi-Fi path. If the first Wi-Fi path meets a preset handover condition, the mobile terminal performs Wi-Fi scanning on a surrounding candidate AP through the second Wi-Fi path in an idle state to obtain a first scanning result. The mobile terminal accesses, based on the first scanning result, the candidate AP through the second Wi-Fi path, and is handed over from performing the Wi-Fi service through the first Wi-Fi path to performing the Wi-Fi service through the second Wi-Fi path. The mobile terminal in this application has two Wi-Fi paths. When performing the Wi-Fi service through one of the Wi-Fi paths, the mobile terminal performs scanning through the other Wi-Fi path, and implements a Wi-Fi service handover based on a scanning result. The Wi-Fi service is not affected in a scanning process, and continuity of the Wi-Fi service is maintained in a handover process.

## Description

This application claims priority to Chinese Patent Application No. 202310260328.6, filed with the China National Intellectual Property Administration on March 7, 2023 and entitled "HANDOVER METHOD AND APPARATUS", which is incorporated herein by reference in its entirety.

### TECHNICAL FIELD

This application relates to the field of communication technologies, and in particular, to a handover method and an apparatus.

### BACKGROUND

A Wi-Fi (Wireless Fidelity, wireless fidelity) technology is a brand of a wireless network communication technology based on IEEE 802.11 series standards, and aims to improve interoperability between wireless network products based on the IEEE 802.11 standards. The Wi-Fi technology is owned by the Wi-Fi Alliance (Wi-Fi Alliance). Simply, Wi-Fi is a type of wireless networking technology.

In Wi-Fi, a mobile terminal of a user accesses a Wi-Fi network through a wireless access point (Access Point, AP). When a received signal strength of the mobile terminal for an accessed AP is weak, a status of a surrounding AP is usually obtained through full channel scanning. Because full channel scanning takes a long time, for example, 1.6 seconds to 2.4 seconds, and services are unavailable during full channel scanning, user experience is affected.

### SUMMARY

In view of the foregoing content, it is necessary to provide a handover method and an apparatus. A mobile terminal implementing the handover method has a dual band dual concurrent capability and has two Wi-Fi paths. When performing a Wi-Fi service through one of the Wi-Fi paths, the mobile terminal performs Wi-Fi scanning through an idle Wi-Fi path, and performs an AP handover based on a scanning result. Wi-Fi scanning and Wi-Fi service execution are synchronously performed and do not affect each other, which reduces overall time of a Wi-Fi handover.

According to a first aspect, an embodiment of this application provides a handover method, applied to a mobile terminal. The mobile terminal supports a synchronous dual band dual concurrent capability, and the mobile terminal has a first Wi-Fi path and a second Wi-Fi path. The handover method includes: The mobile terminal accesses a target wireless access point AP through the first Wi-Fi path, and performs a Wi-Fi service through the first Wi-Fi path. If the first Wi-Fi path meets a preset handover condition, the mobile terminal performs Wi-Fi scanning on a surrounding candidate AP through the second Wi-Fi path in an idle state to obtain a first scanning result. The mobile terminal accesses, based on the first scanning result, the candidate AP through the second Wi-Fi path, and is handed over from performing the Wi-Fi service through the first Wi-Fi path to performing the Wi-Fi service through the second Wi-Fi path.

According to the foregoing technical solution, the mobile terminal has the dual band dual concurrent capability and has two Wi-Fi paths. When performing the Wi-Fi service through one of the Wi-Fi paths, the mobile terminal performs Wi-Fi scanning through an idle Wi-Fi path, and performs an AP handover based on a scanning result. Wi-Fi scanning and Wi-Fi service execution are synchronously performed and do not affect each other, which reduces overall time of a Wi-Fi handover. In addition, the mobile terminal implements the Wi-Fi service handover through the two Wi-Fi paths. Continuity of the Wi-Fi service is ensured in a handover process, and user experience is improved.

In a possible implementation of the first aspect, the handover method further includes: disconnecting the first Wi-Fi path from the target AP, and performing Wi-Fi scanning on the candidate AP through the first Wi-Fi path to obtain a second scanning result; and accessing, based on the second scanning result, the candidate AP through the first Wi-Fi path, and performing the Wi-Fi service through the first Wi-Fi path.

In this way, after a service handover is performed once, Wi-Fi scanning is performed, through the other path of the mobile terminal, on an AP that corresponds to the path for executing the Wi-Fi service, to select a Wi-Fi path that corresponds to a same AP and whose signal strength is strong to perform the Wi-Fi service, which improves user experience of the Wi-Fi service.

Further, the two Wi-Fi paths of the mobile terminal are usually two frequency bands or different channels in one frequency band. In this way, scanning on a same AP is performed, to select a channel that corresponds to the AP and whose signal strength is the best to perform the Wi-Fi service, which improves user experience.

In a possible implementation of the first aspect, the first Wi-Fi path is in a first frequency band, and the second Wi-Fi path is in a second frequency band. After Wi-Fi scanning is performed through the second Wi-Fi path in the idle state to obtain the first scanning result, the handover method further includes: determining a signal strength of the candidate AP in the first frequency band based on the first scanning result for the second frequency band.

In this way, because the mobile terminal has the two Wi-Fi paths, when performing the Wi-Fi service through one of the Wi-Fi paths, the mobile terminal performs Wi-Fi scanning through the other Wi-Fi path, and predicts signal quality, of a working Wi-Fi path, for the candidate AP based on a scanning result, so that the working Wi-Fi path may determine, based on a predicted scanning result, whether to be handed over from the target AP to the candidate AP. The handover can be implemented without Wi-Fi scanning performed through the current Wi-Fi path, which reduces handover time.

In a possible implementation of the first aspect, the handover method further includes: accessing the candidate AP via handover through the first Wi-Fi path based on the signal strength of the candidate AP in the first frequency band.

In this way, if a predicted signal strength of the candidate AP is greater than a preset threshold or greater than a signal strength of the target AP, the Wi-Fi path of the mobile terminal is handed over from the target AP to the candidate AP.

In a possible implementation of the first aspect, the handover method further includes: obtaining a current location of the mobile terminal; determining a Wi-Fi geofencing area that overlaps the current location; and accessing, through the first Wi-Fi path or the second Wi-Fi path, a candidate AP that corresponds to the Wi-Fi geofencing area.

In this way, a corresponding Wi-Fi geofencing area is determined based on the current location of the mobile terminal, and an AP accessed by the mobile terminal is determined based on the Wi-Fi geofencing area, so that the mobile terminal accesses a corresponding AP based on a location in which the mobile terminal is located.

In a possible implementation of the first aspect, obtaining the current location of the mobile terminal includes: determining the current location of the mobile terminal based on a smart home device to which the mobile terminal establishes a connection.

In this way, a location of the smart home device is fixed, and the location of the mobile terminal is determined based on a connection between the fixedly disposed smart home device and the mobile terminal, which helps implement accurate positioning of the mobile terminal.

In a possible implementation of the first aspect, if the Wi-Fi geofencing area that overlaps the current location has at least two corresponding candidate APs, accessing, through the first Wi-Fi path or the second Wi-Fi path, the candidate AP that corresponds to the Wi-Fi geofencing area includes: determining a corresponding roaming path based on the target AP and the Wi-Fi geofencing area, where the roaming path includes the target AP currently accessed by the mobile terminal and a candidate AP, in the Wi-Fi geofencing area, to be connected via handover from the currently accessed target AP; determining a candidate AP based on the roaming path; and accessing the candidate AP through the first Wi-Fi path or the second Wi-Fi path.

In this way, accuracy of determining an AP that corresponds to the Wi-Fi geofencing area is ensured based on the roaming path, and an access success rate of the mobile terminal is ensured.

In a possible implementation of the second aspect, the handover method further includes: obtaining an access result of accessing the candidate AP by the mobile terminal, where the access result includes an access success and an access failure; and updating the roaming path based on the access result.

In this way, the roaming path is self-learned based on the access result, to improve accuracy and timeliness of the roaming path.

In a possible implementation of the first aspect, performing Wi-Fi scanning through the second Wi-Fi path in the idle state includes: determining a candidate AP based on the target AP and a roaming path, where the roaming path includes the target AP currently accessed by the mobile terminal and a candidate AP to be connected via handover from the currently accessed target AP; and performing Wi-Fi scanning on the candidate AP through the second Wi-Fi path in the idle state.

In this way, a Wi-Fi scanning range is limited based on the roaming path, which improves Wi-Fi scanning efficiency.

According to a second aspect, a mobile terminal is provided. The mobile terminal includes: one or more processors; and a memory, configured to store one or more programs, where when the one or more programs are executed by the one or more processors, the one or more processors are enabled to implement the handover method according to the first aspect.

According to a third aspect, a computer-readable storage medium is provided. The computer-readable storage medium stores a computer program. When the program is executed by a processor, the handover method according to the first aspect is implemented.

It should be understood that, for technical effects of any one of the designs of the second aspect and the third aspect, refer to the beneficial effects in the corresponding method provided above. Details are not described herein again.

### BRIEF DESCRIPTION OF DRAWINGS

FIG. 1 is a diagram of a roaming handover scenario of a mobile terminal according to an embodiment of this application;
FIG. 2 is a schematic flowchart of a handover method according to an embodiment of this application;
FIG. 3A, FIG. 3B, FIG. 3C, and FIG. 3D are diagrams of application scenarios of a handover method for a mobile terminal according to an embodiment of this application;
FIG. 4 is a schematic flowchart of another handover method according to an embodiment of this application;
FIG. 5A is a diagram of a home space according to an embodiment of this application;
FIG. 5B is a diagram of Wi-Fi geofencing areas in a home space according to an embodiment of this application;
FIG. 6 is a schematic flowchart of still another handover method according to an embodiment of this application;
FIG. 7 is a diagram of another application scenario of a mobile terminal according to an embodiment of this application;
FIG. 8 is a diagram of a module of a mobile terminal according to an embodiment of this application; and
FIG. 9 is a diagram of hardware of a mobile terminal according to an embodiment of this application.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. To be precise, use of the word such as "example" or "for example" is intended to present a relative concept in a specific manner.

Unless otherwise defined, all technical and scientific terms used in this specification have same meanings as those usually understood by a person skilled in the art of this application. Terms used in this specification of this application are merely for the purpose of describing specific embodiments, but are not intended to limit this application. It should be understood that in this application, unless otherwise specified, "a plurality of" means two or more than two, and the term "and/or" includes any and all combinations of one or more associated listed items.

First, technical terms in embodiments of this application are described.

### 1. Received signal strength indicator (Received Signal Strength Indicator, RSSI)

The RSSI indicates a signal strength on a wireless network and is used to determine connection quality. An RSSI value attenuates as a distance increases. The RSSI is a signal strength, of an AP, scanned by a STA. That is, the AP sends a broadcast packet, and the STA receives the broadcast packet and determines the signal strength of the AP based on the broadcast packet. For a same AP, RSSIs scanned by different STAs are different. Therefore, the RSSIs in this application are all for a current STA, that is, RSSIs of the STA for APs.

### 2. Dual band dual concurrent (dual band dual concurrent, DBDC)

DBDC means that the electronic device may simultaneously run on channels in two different frequency bands. For example, the device may simultaneously work on a 2.4 GHz STA channel and a 5 GHz P2P channel. Working modes other than DBDC all do not support simultaneous running on two channels. For example, dual band single concurrent (dual band single concurrent, DBSC), dual band adaptive concurrent (dual band adaptive concurrent, DBAC), and an intra-frequency intra-channel working mode supports only time division multiplexing on two channels.

To better understand a handover method and an apparatus disclosed in embodiments of this application, the following first describes an application scenario of the handover method in this application.

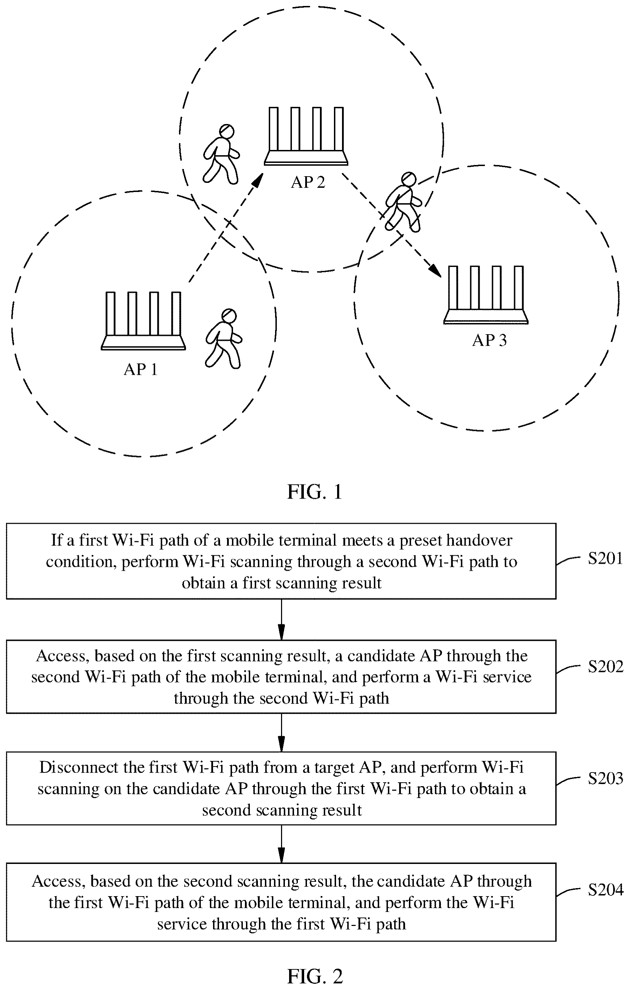

FIG. 1 is a diagram of a roaming handover scenario of a mobile terminal according to an embodiment of this application.

The mobile terminal in embodiments of this application may include a handheld device, a vehicle-mounted device, a wearable device, or a computing device that has a radio communication function, another processing device connected to a wireless modem, user equipment (User Equipment, UE) in various forms, a mobile station (Mobile Station, MS), a terminal device (terminal device), and the like. For ease of description, the devices mentioned above are collectively referred to as the mobile terminal.

The scenario shown in FIG. 1 includes three AP (Access Point, access point) devices: an AP 1, an AP 2, and an AP 3. The AP 1 has a coverage area A, the AP 2 has a coverage area B, and the AP 3 has a coverage area C. A user carries the mobile terminal to move in the coverage areas. To ensure that the mobile terminal can access an AP with an optimal signal strength, the mobile terminal periodically performs full channel scanning during movement of the user to obtain signal strengths of neighboring APs. Performance of a currently running Wi-Fi service, especially a low-latency service, is reduced due to full channel scanning, which affects user performance.

Based on the foregoing problem, an embodiment of this application provides a handover method, applied to the mobile terminal. The mobile terminal supports a synchronous dual band dual concurrent capability. The mobile terminal has a first Wi-Fi path and a second Wi-Fi path, accesses a target AP through the first Wi-Fi path, and performs a Wi-Fi service through the first Wi-Fi path. When the first Wi-Fi path of the mobile terminal meets a handover condition, for example, network quality for performing the Wi-Fi service is poor, the mobile terminal performs Wi-Fi scanning through the second Wi-Fi path in an idle state, determines a candidate AP based on a scanning result, and accesses the candidate AP through the second Wi-Fi path. After successfully accessing the candidate AP, the mobile terminal performs the Wi-Fi service through the second Wi-Fi path. In a process in which the mobile terminal is handed over from the target AP to the candidate AP, the Wi-Fi service is performed through one of the Wi-Fi paths, and Wi-Fi scanning is performed through the other Wi-Fi path. The Wi-Fi service is not affected in a Wi-Fi scanning process, and for each path, only a channel that corresponds to the path needs to be scanned. Therefore, scanning time is short, and handover time is reduced. In addition, in a handover process, a service of the user is not disconnected, which ensures continuity of the Wi-Fi service.

FIG. 2 is a schematic flowchart of the handover method according to an embodiment of this application. The handover method is applied to a mobile terminal. The mobile terminal has two Wi-Fi paths. Frequency bands of the two Wi-Fi paths may be different. For example, the first Wi-Fi path is in a 2.4 GHz frequency band, and the second Wi-Fi path is in a 5 GHz frequency band. Certainly, in another embodiment, the frequency bands of the two Wi-Fi paths may be the same, but channels of the two Wi-Fi paths are different. For example, both the first Wi-Fi path and the second Wi-Fi path are in the 5 GHz frequency band, the first Wi-Fi path has a channel 1 and a channel 2, and the second Wi-Fi path has a channel 3 and a channel 4.

The two Wi-Fi paths of the mobile terminal are: the first Wi-Fi path and the second Wi-Fi path. In the following scenarios, the mobile terminal accesses the target AP through the first Wi-Fi path, and performs the Wi-Fi service through the first Wi-Fi path, and the second Wi-Fi path is in the idle state, that is, the mobile terminal does not access any AP through the second Wi-Fi path.

For example, the user may perform the Wi-Fi service through the first Wi-Fi path of the mobile terminal, for example, performing the Wi-Fi service such as a voice call or a video call, and data of the service is transmitted through the first Wi-Fi path.

As shown in FIG. 2, the handover method may include the following steps.

S201: If the first Wi-Fi path of the mobile terminal meets a preset handover condition, perform Wi-Fi scanning through the second Wi-Fi path to obtain a first scanning result.

Specifically, in a process in which the mobile terminal performs the Wi-Fi service through the first Wi-Fi path, network quality of the Wi-Fi service deteriorates. For example, quality of experience of the Wi-Fi service deteriorates, an RSSI decreases, and a packet loss rate increases. In this case, it is determined that the first Wi-Fi path of the mobile terminal meets the handover condition, and the Wi-Fi service performed through the first Wi-Fi path may be handed over to the second Wi-Fi path, or a connection is handed over from the target AP to another candidate AP with a strong signal strength.

In some embodiments, if an RSSI, of the first Wi-Fi path of the mobile terminal, for the target AP is less than a preset threshold, it is determined that the first Wi-Fi path of the mobile terminal meets the preset handover condition.

In this case, the mobile terminal performs the Wi-Fi service through the first Wi-Fi path, and performs Wi-Fi scanning through the second Wi-Fi path, and execution of the Wi-Fi service is not affected in the Wi-Fi scanning process of the mobile terminal.

In some embodiments, the first scanning result includes a candidate AP list and channel quality that corresponds to each candidate AP. The candidate AP list is service set identifiers (Service Set Identifiers, SSIDs) of a plurality of scanned APs. The SSID is used to identify a corresponding AP, and channel quality may be an RSSI, of the candidate AP, for a channel on which the mobile terminal passes through the first Wi-Fi path.

S202: Access, based on the first scanning result, the candidate AP through the second Wi-Fi path of the mobile terminal, and perform the Wi-Fi service through the second Wi-Fi path.

Specifically, when the mobile terminal performs the Wi-Fi service through the first

Wi-Fi path, if the network quality of the Wi-Fi service deteriorates, the mobile terminal performs Wi-Fi scanning through the second Wi-Fi path, and determines the candidate AP list based on the first scanning result. The candidate AP list includes at least one candidate AP.

Then, the mobile determines a candidate AP with best network quality (the candidate AP with best network quality is different from the target AP) in the candidate AP list, and then accesses the candidate AP through the second Wi-Fi path. After the access succeeds, the mobile terminal performs the Wi-Fi service through the second Wi-Fi path. That is, the Wi-Fi service is handed over from the first Wi-Fi path to the second Wi-Fi path, and is handed over from the target AP to the candidate AP.

In the foregoing handover process, Wi-Fi scanning is performed through the second Wi-Fi path, and Wi-Fi scanning does not affect a Wi-Fi service that is simultaneously performed. After the mobile terminal successfully accesses the candidate AP through the second Wi-Fi path, the Wi-Fi service is handed over to the second Wi-Fi path, and the Wi-Fi service is not interrupted. This ensures service continuity and implements seamless roaming of the Wi-Fi service.

It may be understood that in the foregoing embodiment, the candidate AP and the target AP are two different APs. It may be understood that in another embodiment, the candidate AP and the target AP are a same AP, the first Wi-Fi path of the mobile terminal is in a first frequency band, and the second Wi-Fi path is in a second frequency band. The first frequency band is different from the second frequency band. When the mobile terminal accesses the target AP through the first Wi-Fi path, and performs the Wi-Fi service through the first Wi-Fi path, and the first Wi-Fi path of the mobile terminal meets the handover condition, the mobile terminal performs Wi-Fi scanning on the target AP through the second Wi-Fi path, and determines, based on a scanning result, that a signal strength, of the target AP, for the second frequency band is strong. Then, the mobile terminal accesses the target AP through the second Wi-Fi path, and performs the Wi-Fi service through the second Wi-Fi path after the access succeeds. The foregoing handover method further includes:
performing Wi-Fi scanning on the target AP through the second Wi-Fi path to obtain a target scanning result; and
accessing, based on the target scanning result, the target AP through the second Wi-Fi path, and performing the Wi-Fi service through the second Wi-Fi path.

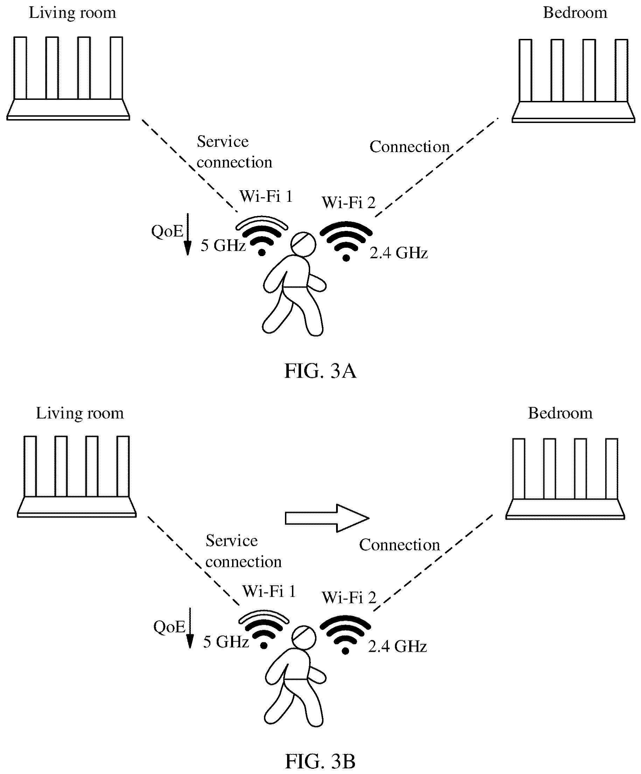

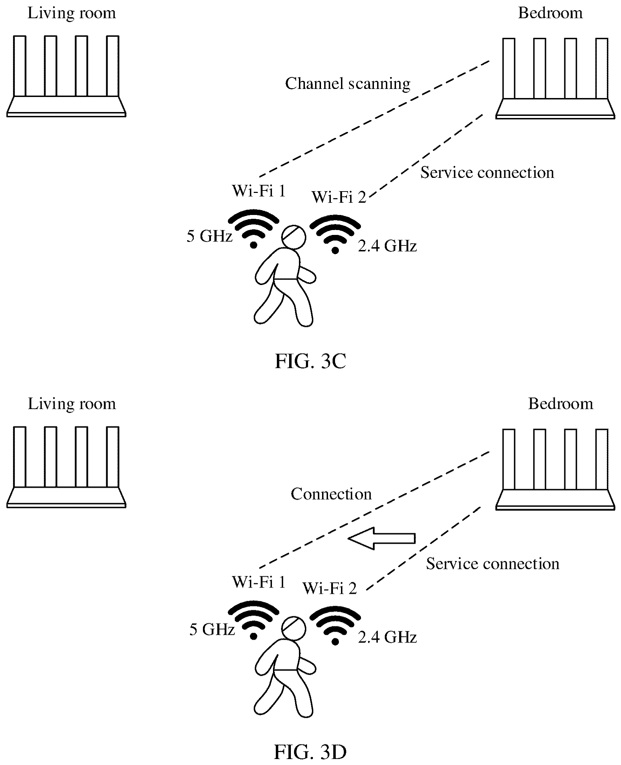

FIG. 3A, FIG. 3B, FIG. 3C, and FIG. 3D are diagrams of application scenarios of the handover method according to an embodiment of this application. As shown in FIG. 3A, the mobile terminal of the user has a first Wi-Fi path Wi-Fi 1 and a second Wi-Fi path Wi-Fi 2. The first Wi-Fi path is in the 5 GHz frequency band, and the second Wi-Fi path is in the 2.4 GHz frequency band. The mobile terminal is connected to a router in a living room through the Wi-Fi 1 and achieves a service connection with the router in the living room through the Wi-Fi 1, to perform the Wi-Fi service. Quality of experience (Quality of Experience, QoE) of the Wi-Fi 1 deteriorates in a process in which the user moves from the living room to a bedroom. For example, an RSSI, of the Wi-Fi 1, for the router in the living room is less than a signal threshold. In this case, it is determined that QoE of the Wi-Fi 1 deteriorates, and it is determined that the Wi-Fi 1 meets the handover condition, and Wi-Fi scanning performed through the Wi-Fi 2 in the idle state is triggered at the same time. For example, channel scanning is performed based on a channel supported by the frequency band of the Wi-Fi 2.

Then, it is determined, based on the scanning result, that the router in the bedroom meets an access condition. For example, an RSSI of a router in the bedroom is better than an RSSI of the router in the living room, and the RSSI of the router in the bedroom is greater than the preset threshold. In this case, as shown in FIG. 3B, the mobile terminal accesses the router in the bedroom through the Wi-Fi 2. After the access succeeds, the Wi-Fi service is performed through the Wi-Fi 2. That is, the Wi-Fi service performed through the Wi-Fi 1 is handed over to the Wi-Fi 2 for being performed, the Wi-Fi service is handed over from being implemented through the Wi-Fi 1 to being implemented through the Wi-Fi 2, and the Wi-Fi service is handed over from being implemented through the router in the living room to being implemented through the router in the bedroom.

Further, as shown in FIG. 3C, after the Wi-Fi service is successfully handed over from being implemented through the Wi-Fi 1 to being implemented through the Wi-Fi 2, the Wi-Fi 1 is disconnected from the router in the living room. Then, Wi-Fi scanning is performed on the router in the bedroom through the Wi-Fi 1, and quality of a channel that corresponds to the Wi-Fi 1 or a channel that corresponds to the Wi-Fi 2 is better is determined based on a result of scanning performed through the Wi-Fi 1 and a result of scanning, performed through the Wi-Fi 2, on the router in the bedroom. If quality of the channel that corresponds to the Wi-Fi 1 is good, as shown in FIG. 3D, the Wi-Fi 1 is connected to the router in the bedroom. After the access succeeds, the Wi-Fi service is handed over from the Wi-Fi 2 to the Wi-Fi 1. If quality of the channel that corresponds to the Wi-Fi 2 is good, a Wi-Fi service handover is not performed. This ensures that the Wi-Fi service is performed through a Wi-Fi path with optimal channel quality.

In this case, the handover method further includes the following steps.

S203: Disconnect the first Wi-Fi path from the target AP, and perform Wi-Fi scanning on the candidate AP through the first Wi-Fi path to obtain a second scanning result.

The second scanning result includes a candidate AP accessed by the mobile terminal through the first Wi-Fi path and a signal strength of the candidate AP.

S204: Access, based on the second scanning result, the candidate AP through the first Wi-Fi path of the mobile terminal, and perform the Wi-Fi service through the first Wi-Fi path.

Specifically, after the Wi-Fi service performed through the first Wi-Fi path is handed over to the second Wi-Fi path, the mobile terminal disconnects the first Wi-Fi path from the target AP, and performs Wi-Fi scanning on the candidate AP through the first Wi-Fi path. If determining, based on a scanning result, that a signal strength, of the first Wi-Fi path, for the candidate AP is better than a signal strength, of the second Wi-Fi path, for the candidate AP, the mobile terminal accesses the candidate AP through the first Wi-Fi path. In this case, the two Wi-Fi paths of the mobile terminal both access the candidate AP. Then, the Wi-Fi service performed through the second Wi-Fi path is handed over to the first Wi-Fi path, to ensure that an optimal signal strength is provided for the Wi-Fi service, thereby improving user experience.

In some embodiments, the first Wi-Fi path of the mobile terminal is in the first frequency band, and the second Wi-Fi path is in the second frequency band. Both the first frequency band and the second frequency band may include a plurality of channels. For example, the first frequency band is the 2.4 GHz frequency band, and the second frequency band is the 5 GHz frequency band. It may be understood that experience quality of some Wi-Fi services in the 5 GHz frequency band is better than experience quality of the Wi-Fi services in the 2.4 GHz frequency band. Therefore, when executing a specific Wi-Fi service, the mobile terminal preferentially performs the specific Wi-Fi service in a specified frequency band or on a specified channel in a specified frequency band.

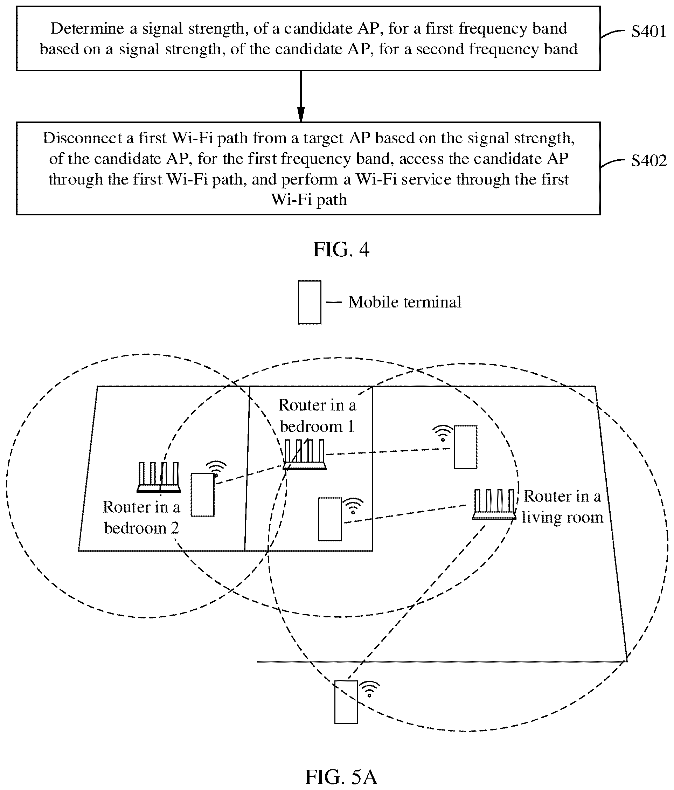

In this case, refer to FIG. 4. FIG. 4 is a schematic flowchart of another handover method according to an embodiment of this application.

If the signal strength in the first scanning result in S201 is a signal strength, of the candidate AP, for the second frequency band, after S201, the foregoing handover method further includes the following steps.

S401: Determine a signal strength, of the candidate AP, for the first frequency band based on the signal strength, of the candidate AP, for the second frequency band.

It may be understood that a signal strength (for example, an RSSI) of an AP is mostly related to a distance. For example, a longer distance indicates a weaker signal, and distances between the two frequency bands of the mobile terminal and the AP are the same. Therefore, signal strengths of the candidate AP that correspond to different frequency bands or different channels in a same frequency band of the same mobile terminal are associated. Therefore, the second frequency band of the candidate AP may be scanned through the second Wi-Fi path, to obtain a scanning result. A result of scanning the first frequency band of the candidate AP is predicted based on the result of scanning the second frequency band of the candidate AP. That is, the signal strength, of the candidate AP, for the first frequency band is predicted based on the signal strength, of the candidate AP, for the second frequency band.

For example, it is determined that a difference between RSSIs of the two frequency bands of the mobile terminal is 4 dBm. If an RSSI, of the candidate AP, for the first frequency band is 67 dBm, an RSSI, of the candidate AP, for the second frequency band is 70 dBm.

In some embodiments, a correlation between signal strengths of the two frequency bands of the mobile terminal, for example, the difference between the RSSIs, may be determined through a plurality of times of measurement, so that the signal strengths of the two frequency bands can be accurately estimated based on the signal strength of one of the frequency bands. Certainly, in another embodiment, the correlation between the signal strengths of the two frequency bands of the mobile terminal may be determined in another manner. This is not limited in this application.

S402: Disconnect the first Wi-Fi path from the target AP based on the signal strength, of the candidate AP, for the first frequency band, access the candidate AP through the first Wi-Fi path, and perform the Wi-Fi service through the first Wi-Fi path.

Specifically, the signal strength, of the candidate AP, for the first frequency band is predicted based on the signal strength, of the candidate AP, for the second frequency band. If the signal strength, of the candidate AP, for the first frequency band meets a preset signal strength threshold, it is determined that the signal strength of the candidate AP is strong, and the first Wi-Fi path of the mobile terminal may be handed over from the target AP to the candidate AP. After the handover is completed, the Wi-Fi service is performed through the first Wi-Fi path.

In this way, when the mobile terminal performs the Wi-Fi service through the first Wi-Fi path, if network quality of the Wi-Fi service is poor, the mobile terminal performs Wi-Fi scanning on the second frequency band through the second Wi-Fi path, and predicts a scanning result of the first frequency band based on a scanning result of the second frequency band. If a predicted scanning result shows that the first Wi-Fi path of the mobile terminal meets the handover condition, the mobile terminal disconnects the first Wi-Fi path from the target AP, and accesses the candidate AP through the first Wi-Fi path. After the access succeeds, the mobile terminal performs the Wi-Fi service through the first Wi-Fi path. In a process in which a connection is handed over from the target AP to the candidate AP, the mobile terminal performs Wi-Fi scanning through the second Wi-Fi path. Performing the Wi-Fi service through the first Wi-Fi path is not affected in a Wi-Fi scanning process. The mobile terminal needs to scan only the channel of the second frequency band through the second Wi-Fi path. Therefore, scanning time is short, and overall handover time is reduced.

To ensure continuity of the Wi-Fi service, the user may set a plurality of routers in a space. When the user moves in the space, the user accesses a corresponding router based on a location of the user, to ensure that the mobile terminal provides a best signal strength for the Wi-Fi service.

FIG. 5A is a diagram of a home space according to an embodiment of this application. The home space includes three subspaces: a bedroom 1, a bedroom 2, and a living room. Corresponding routers are disposed in the bedroom 1, the bedroom 2, and the living room. However, when the user moves among the bedroom 1, the bedroom 2, and the living room, the mobile terminal of the user cannot always establish a connection to a router with a best signal strength. For example, when the user enters the bedroom from the living room, the mobile terminal of the user always establishes a connection to the router in the living room, causing poor network quality of the Wi-Fi service of the mobile terminal, and affecting user experience. As shown in FIG. 5A, the user is in the bedroom 2, but the mobile terminal is connected to a router in the bedroom 1; the user is in the bedroom 1, but the mobile terminal is connected to the router in the living room; and the user is in the living room, but the mobile terminal is connected to the router in the bedroom 1. That is, the mobile terminal cannot establish the connection to the router with the best signal strength, affecting user experience.

Based on the foregoing problem, in this embodiment of this application, an AP that corresponds to a Wi-Fi geofencing area of each AP is determined. When entering the Wi-Fi geofencing area, the mobile terminal establishes a connection to the AP that corresponds to the Wi-Fi geofencing area, to ensure network quality of the Wi-Fi service performed by the mobile terminal.

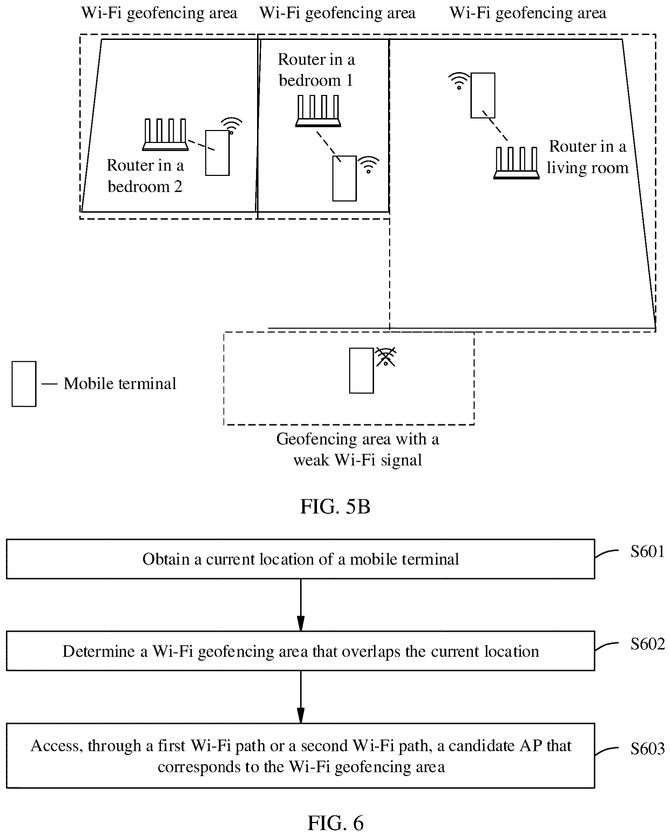

FIG. 5B is a diagram of another home space according to an embodiment of this application. The home space includes a bedroom 1, a bedroom 2, and a living room. Corresponding routers are disposed in the bedroom 1, the bedroom 2, and the living room. Three Wi-Fi geofencing areas are set based on locations of the routers and area shapes of the bedroom 1, the bedroom 2, and the living room. If the mobile terminal of the user is located in the bedroom 1, that is, located in a Wi-Fi geofencing area that corresponds to the bedroom 1, the mobile terminal accesses a router in the bedroom 1. If the mobile terminal of the user enters the living room from the bedroom 1, and a Wi-Fi geofencing area that corresponds to a current location is determined based on the current location of the mobile terminal, a connection of the mobile terminal is handed over from the router in the bedroom 1 to a router in the living room.

Further, if the current location of the user is not in the Wi-Fi geofencing area, for example, in a geofencing area with a weak Wi-Fi signal, the mobile terminal of the user establishes a data connection to another network such as a cellular network, and performs a data service.

In this case, refer to FIG. 6. FIG. 6 is a schematic flowchart of another handover method according to an embodiment of this application. The handover method further includes the following steps.

S601: Obtain the current location of the mobile terminal.

Specifically, the current location of the mobile terminal is determined based on sensing information of a sensor carried by the mobile terminal. For example, an actual absolute location of the mobile terminal is determined based on GPS information. Certainly, relative locations of the mobile terminal and another electronic device may also be determined based on a relative relationship between the mobile terminal and the another electronic device.

S602: Determine a Wi-Fi geofencing area that overlaps the current location.

Each candidate AP has a corresponding Wi-Fi geofencing area, where the Wi-Fi geofencing area is a coverage area of the candidate AP, and different candidate APs have their own specific Wi-Fi geofencing areas. The Wi-Fi geofencing area corresponds to each AP may be preset in the mobile terminal, or may be adaptively determined based on scanning information of the mobile terminal and a shape of an area in which the AP is located. As shown in FIG. 5B, three Wi-Fi geofencing areas are determined based on the spatial shapes of the subspaces.

S603: Access, through the first Wi-Fi path or the second Wi-Fi path, the candidate AP that corresponds to the Wi-Fi geofencing area.

In this way, in a movement process of the mobile terminal, the Wi-Fi geofencing area that overlaps the current location is determined based on the current location of the mobile terminal, and the candidate AP that corresponds to the Wi-Fi geofencing area is accessed, to ensure that the mobile terminal can always access an AP with a strong signal strength, and ensure service quality of the Wi-Fi service of the mobile terminal.

Still with reference to FIG. 5B, when there is no Wi-Fi geofencing area in the location of the mobile terminal or the mobile terminal moves out of the Wi-Fi geofencing area, the mobile terminal disconnects from the AP and may perform wireless data transmission through the cellular network, to ensure quality of service of the Wi-Fi service (or the data service) of the mobile terminal.

In FIG. 5B, there are three Wi-Fi geofencing areas in the home space, and the three Wi-Fi geofencing areas are all squares. It may be understood that a signal coverage area of each AP is a circle with an AP as a circular center, and a single Wi-Fi geofencing area is located in signal coverage areas of a plurality of APs. How to determine the Wi-Fi geofencing area that corresponds to each AP is a problem.

For example, in FIG. 5B, in an area in which the living room is located, a signal strength of an AP in the living room is better than signal strengths of APs in the bedroom 1 and the bedroom 2. In this case, the living room may be set as a Wi-Fi geofencing area that corresponds to the AP in the living room. However, in an area between some neighboring APs, signal strengths, of two or three APs, for the area are close or equal. In this case, to determine an AP corresponding to the Wi-Fi geofencing area, a roaming path may be configured through machine learning or based on results of a plurality of times of tests. A roaming router includes a target AP and a candidate AP to be connected via handover from the target AP. The candidate AP is a candidate AP to which the mobile terminal can be successfully handed over from the currently connected target A after the mobile terminal moves to the Wi-Fi geofencing area.

In the foregoing handover method, S603 includes:
determining a corresponding roaming path based on the target AP and the Wi-Fi geofencing area;
determining, based on the roaming path, the candidate AP that corresponds to the Wi-Fi geofencing area; and
accessing the candidate AP through the first Wi-Fi path or the second Wi-Fi path.

In this way, the Wi-Fi geofencing area corresponding to the location in which the mobile terminal is located is determined, the target AP currently accessed by the mobile terminal and the Wi-Fi geofencing area are determined, and the corresponding candidate AP is determined. The candidate AP is an AP, namely, a candidate AP, with a high probability that the mobile terminal is successfully handed over from the current target AP in the Wi-Fi geofencing area, and the mobile terminal accesses the candidate AP. The corresponding candidate AP is selected based on the roaming path, which improves an access success rate of the candidate AP.

For example, if the mobile terminal moves to the Wi-Fi geofencing area for eight times, successfully accesses an AP 1 for three times, and successfully accesses an AP 2 for five times, an access success rate of the AP 1 is 3/8, and an access success rate of the AP 2 is 5/8. In this case, the access success rate of the AP 2 is high, and the candidate AP that is in the roaming path and that is to be connected via handover from the current target AP is the AP 2.

In some embodiments, after the candidate AP that corresponds to the Wi-Fi geofencing area is determined, the handover method further includes:
obtaining an access result of accessing the candidate AP by the mobile terminal, where the access result includes an access success and an access failure; and
updating the roaming path based on the access result.

Specifically, after the mobile terminal moves to a corresponding Wi-Fi geofencing area each time, and a connection is handed over from the current target AP to the candidate AP, access success rates of all candidate APs are updated based on the access result. Then, an AP with a last access success rate is used as an AP that is in the roaming path and to which the connection is handed over.

It may be understood that there are a plurality of types of mobile terminals, and positioning capabilities of the mobile terminals are different. Therefore, when the mobile terminal cannot be accurately positioned based on the positioning capability of the mobile terminal, to obtain the current location of the mobile terminal, location information of the mobile terminal may be determined based on a connection between the mobile terminal and another smart home device. This determines whether the mobile terminal is located in the corresponding Wi-Fi geofencing area.

It is easy to understand that a plurality of smart home devices, such as a smart speaker and a smart screen, are mounted in both an office place and a home place, and locations of the smart home devices are mostly fixed. When the user carrying the mobile terminal moves, the mobile terminal establishes a connection to the smart home device, for example, establishing a Bluetooth connection. Because the location of the smart device is fixed, the location information of the mobile terminal may be determined based on the smart device connected to the mobile terminal, and then a Wi-Fi geofencing area in which the mobile terminal is located may be determined based on the location information.

In some embodiments, S601 specifically includes:
determining the current location of the mobile terminal based on the smart home device to which the mobile terminal establishes a connection.

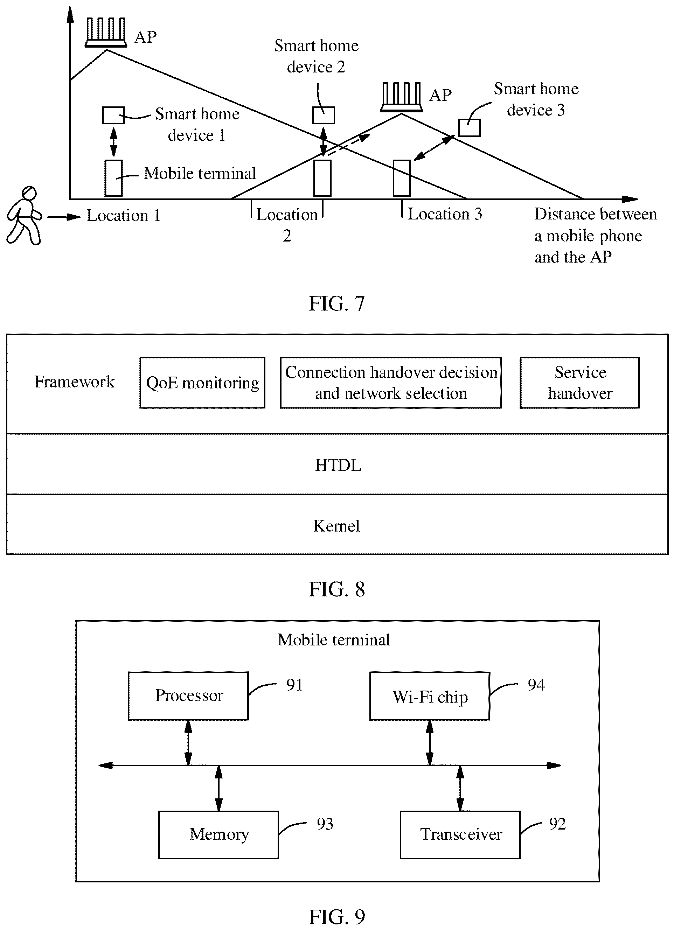

FIG. 7 is a diagram of another application scenario of the mobile terminal according to an embodiment of this application. In a movement process of the user, the mobile terminal establishes a connection to a smart home device 1 at a location 1, establishes a connection to a smart home device 2 at a location 2, and establishes a connection to a smart home device 3 at a location 3. In this way, in the movement process of the user, the current location of the mobile terminal is determined based on the smart home device to which the mobile terminal establishes a connection. Then, the corresponding Wi-Fi geofencing area is determined based on the location of the mobile terminal.

It may be understood that in a process of determining the current location of the mobile terminal based on the connection established between the mobile terminal and the smart home device, if there are a plurality of smart home devices in a Wi-Fi geofencing area, after the mobile terminal is successfully connected to the smart home device, it may be determined that the mobile terminal is located in the Wi-Fi geofencing area.

In this embodiment of this application, a connection established between the mobile terminal and the smart home device is determined through a system setting or a machine learning method, to determine which Wi-Fi geofencing area in which the mobile terminal is located. For example, if the Wi-Fi geofencing area includes a plurality of smart home devices, a probability that the mobile terminal is located in the Wi-Fi geofencing area when the mobile terminal establishes a connection to any one of the smart home devices is determined based on historical data, and a smart device with a highest probability is selected as the target smart home device. If the mobile terminal establishes a connection to the target smart home device, it is determined that the mobile terminal is located in the corresponding Wi-Fi geofencing area.

Each time when the mobile terminal establishes the connection to the smart home device, an access result of the mobile terminal whose connection is handed over from the current target AP to the candidate AP is obtained, and a candidate AP corresponding to the Wi-Fi geofencing area is updated based on the access result.

Self-learning improves roaming service experience, and improves a normal AP selection rate during roaming.

In some embodiments, the first Wi-Fi path of the mobile terminal is in the first frequency band, and the second Wi-Fi path is in the second frequency band. Both the first frequency band and the second frequency band may include a plurality of channels. The mobile terminal scans a corresponding channel to obtain channel quality of a corresponding channel of the AP.

For example, the first frequency band is the 2.4 GHz frequency band, and the first frequency band includes eight channels: 2.4 GHz ch1 to 2.4 GHz ch8. The second frequency band is the 5 GHz frequency band, and the second frequency band includes ten channels: 5 GHz ch1 to 5 GHz ch10.

It may be understood that when the mobile terminal accesses the candidate AP through the second Wi-Fi path, and executes the Wi-Fi service through the second Wi-Fi path, the mobile terminal simultaneously accesses the target AP through the first Wi-Fi path, but does not execute the Wi-Fi service. In this case, the mobile terminal may disconnect the first Wi-Fi path from the target AP, and execute Wi-Fi scanning for the candidate AP. If it is determined, based on a scanning result, that for the candidate AP, the signal strength corresponding to the first frequency band is better than the signal strength of the second frequency band, the mobile terminal accesses the candidate AP through the first Wi-Fi path. In this case, connections between the candidate APs and both of the two paths of the mobile terminal are established. Then, the mobile terminal performs the Wi-Fi service through the first Wi-Fi path, that is, the Wi-Fi service of the mobile terminal is handed over from the second Wi-Fi path to the first Wi-Fi path.

FIG. 8 is a diagram of an architecture of the mobile terminal according to an embodiment of this application. The mobile terminal may implement the handover methods shown in FIG. 2, FIG. 4, and FIG. 6 and the handover methods in other embodiments. With reference to FIG. 8, the mobile terminal includes a kernel layer, an HIDL layer, and a framework layer. The foregoing handover methods are implemented by the framework layer of the mobile terminal.

The framework layer includes a QoE monitoring module, a connection handover decision and network selection module, and a service handover module. These modules may perform corresponding functions of the APs in the foregoing method example. An example is given below.

The QoE monitoring module is used to detect a signal strength of an AP connected to the mobile terminal. When QoE of a Wi-Fi service performed by the mobile terminal becomes worse, the connection handover decision and network selection module implements a handover between the AP and at least two paths of the mobile terminal through the foregoing handover methods. After the handover is completed, the service handover module hands over an ongoing Wi-Fi service to one of the Wi-Fi paths that are successfully connected, to implement a service handover.

It may be understood that FIG. 8 is merely an example of the mobile terminal, but is not a limitation. The mobile terminal may have more or fewer modules than those shown in FIG. 8.

FIG. 9 is a diagram of a possible structure of the mobile terminal in the foregoing embodiments.

The terminal device includes a processor 91, a transceiver 92, a memory 93, and a Wi-Fi chip 94. The processor 91 includes one or more processing cores. The processor 91 runs a software program and a module, to perform various function applications and process information. The transceiver 92 may be implemented as a communication component, and the communication component may be a baseband chip. The transceiver 92, the memory 93, and the Wi-Fi chip 94 may be connected to the processor 91 through a bus. The memory 93 may be configured to store at least one program instruction. The processor 91 is configured to execute the at least one program instruction, to implement the technical solution in the foregoing embodiment. An implementation principle and technical effect of the processor 91 are similar to those of the foregoing method related embodiments. Details are not described herein again.

A person skilled in the art should understand that embodiments of this application may be provided as a method, a system, or a computer program product. Therefore, this application may use a form of hardware embodiments, software embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code. Code of these computer programs may be stored in a computer readable memory that can guide a computer or another programmable data processing device to operate in a particular manner.

An embodiment further provides a computer storage medium. The computer storage medium stores computer instructions. When the computer instructions are run on an ingress device, the ingress device is enabled to perform the foregoing related method steps, to implement the handover method in the foregoing embodiments.

An embodiment further provides a computer program product. When the computer program product runs on an ingress device, the ingress device is enabled to perform the foregoing related steps, to implement the handover method in the foregoing embodiments.

In addition, embodiments of this application further provide an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the handover method in the foregoing method embodiments.

The foregoing descriptions of implementations allow a person skilled in the art to clearly understand that, for the purpose of convenient and brief description, division of the foregoing functional modules is used as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules is merely logical function division. There may be another division manner during actual implementation. For example, a plurality of modules or components may be combined or integrated into another apparatus, or some features may be ignored or not performed. In addition, displayed or discussed mutual couplings or direct couplings or communication connections may be implemented through some interfaces. Indirect couplings or communication connections between apparatuses or modules may be implemented in electronic, mechanical, or other forms.

The modules described as separate parts may be or may not be physically separated. The parts displayed as modules may be one physical module or a plurality of physical modules, that is, may be located at one location or may be distributed at a plurality of different locations. Some or all of the modules may be selected based on an actual requirement to achieve the objectives of the solutions in embodiments.

In addition, functional modules in embodiments of this application may be integrated into one processing module, or each of the modules may exist alone physically, or two or more modules are integrated into one module. The integrated module may be implemented in a form of hardware, or may be implemented in a form of a software functional module.

If the integrated module is implemented in a form of a software functional module and sold or used as an independent product, the integrated module may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A handover method, applied to a mobile terminal, wherein the mobile terminal supports a synchronous dual band dual concurrent capability, the mobile terminal has a first Wi-Fi path and a second Wi-Fi path, and the handover method comprises:
accessing, by the mobile terminal, a target wireless access point AP through the first Wi-Fi path, performing a Wi-Fi service through the first Wi-Fi path, and if the first Wi-Fi path meets a preset handover condition, performing Wi-Fi scanning on a surrounding candidate AP through the second Wi-Fi path in an idle state to obtain a first scanning result; and
accessing, based on the first scanning result, the candidate AP through the second Wi-Fi path, and handing over from performing the Wi-Fi service through the first Wi-Fi path to performing the Wi-Fi service through the second Wi-Fi path.

2. The handover method according to claim 1, wherein the handover method further comprises:
disconnecting the first Wi-Fi path from the target AP, and performing Wi-Fi scanning on the candidate AP through the first Wi-Fi path to obtain a second scanning result; and
accessing, based on the second scanning result, the candidate AP through the first Wi-Fi path, and performing the Wi-Fi service through the first Wi-Fi path.

3. The handover method according to claim 1 or 2, wherein the first Wi-Fi path is in a first frequency band, and the second Wi-Fi path is in a second frequency band; and
after performing Wi-Fi scanning through the second Wi-Fi path in the idle state to obtain the first scanning result, the handover method further comprises:
determining a signal strength of the candidate AP in the first frequency band based on the first scanning result for the second frequency band.

4. The handover method according to claim 3, wherein the handover method further comprises:
accessing the candidate AP via handover through the first Wi-Fi path based on the signal strength of the candidate AP in the first frequency band.

5. The handover method according to any one of claims 1 to 4, wherein the handover method further comprises:
obtaining a current location of the mobile terminal;
determining a Wi-Fi geofencing area that overlaps the current location; and
accessing, through the first Wi-Fi path or the second Wi-Fi path, a corresponding candidate AP in the Wi-Fi geofencing area.

6. The handover method according to claim 5, wherein obtaining the current location of the mobile terminal comprises:
determining the current location of the mobile terminal based on a smart home device to which the mobile terminal establishes a connection.

7. The handover method according to claim 5, wherein if the Wi-Fi geofencing area that overlaps the current location has at least two corresponding candidate APs, accessing, through the first Wi-Fi path or the second Wi-Fi path, the candidate AP that corresponds to the Wi-Fi geofencing area comprises:
determining a corresponding roaming path based on the target AP and the Wi-Fi geofencing area, wherein the roaming path comprises the target AP currently accessed by the mobile terminal and a candidate AP, in the Wi-Fi geofencing area, to be connected via handover from the currently accessed target AP;
determining a candidate AP based on the roaming path; and
accessing the candidate AP through the first Wi-Fi path or the second Wi-Fi path.

8. The handover method according to claim 7, wherein the handover method further comprises:
obtaining an access result of accessing the candidate AP by the mobile terminal, wherein the access result comprises an access success and an access failure; and
updating the roaming path based on the access result.

9. The handover method according to any one of claims 1 to 6, wherein performing Wi-Fi scanning through the second Wi-Fi path in the idle state comprises:
determining a candidate AP based on the target AP and a roaming path, wherein the roaming path comprises the target AP currently accessed by the mobile terminal and a candidate AP to be connected via handover from the currently accessed target AP; and
performing Wi-Fi scanning on the candidate AP through the second Wi-Fi path in the idle state.

10. A mobile terminal, wherein the mobile terminal comprises:
one or more processors; and
a memory, configured to store one or more programs, wherein
when the one or more programs are executed by the one or more processors, the one or more processors are enabled to implement the handover method according to any one of claims 1 to 9.

11. A computer-readable storage medium, storing a computer program, wherein when the program is executed by a processor, the handover method according to any one of claims 1 to 9 is implemented.
